# EUROPEAN PATENT SPECIFICATION

(11) **EP 0 420 701 B1**
(45) Date of publication and mention of the grant of the patent: **04.01.1995**
(21) Application number: 90310710.0
(22) Date of filing: 28.09.1990
(51) Int. Cl.: H04N 5/44, H04N 5/91

(54) **Flat-panel display with masking for VTR signals**
Flachbildschirm mit Maskierung für VTR Signale
Dispositif d'affichage avec masquage pour signaux de VTR

(30) Priority: 29.09.1989 JP 256289/89
(43) Date of publication of application: 03.04.1991
(73) Proprietor: SHARP KABUSHIKI KAISHA, Osaka 545 (JP)
(72) Inventor: Tanaka, Masaru, Tenri-shi, Nara-ken (JP); Okano, Masanobu, Tenri-shi, Nara-ken (JP); Mizukata, Katsuya, Tenri-shi, Nara-ken (JP); Takeda, Makoto, Nara-shi, Nara-ken (JP)
(74) Representative: Brown, Kenneth Richard

(56) References cited:
- PATENT ABSTRACTS OF JAPAN, vol. 13, no. 413 (E-820)[3761], 12th September 1989;& JP-A-1 151 888
- PATENT ABSTRACTS OF JAPAN, vol. 7, no. 80 (E-168)[1225], 2nd April 1983;& JP-A-58 7986

## Description

This invention relates to a display apparatus, and more particularly to a display apparatus for displaying images based on video signals received at least from an image reproducing apparatus such as a video tape recorder (VTR).

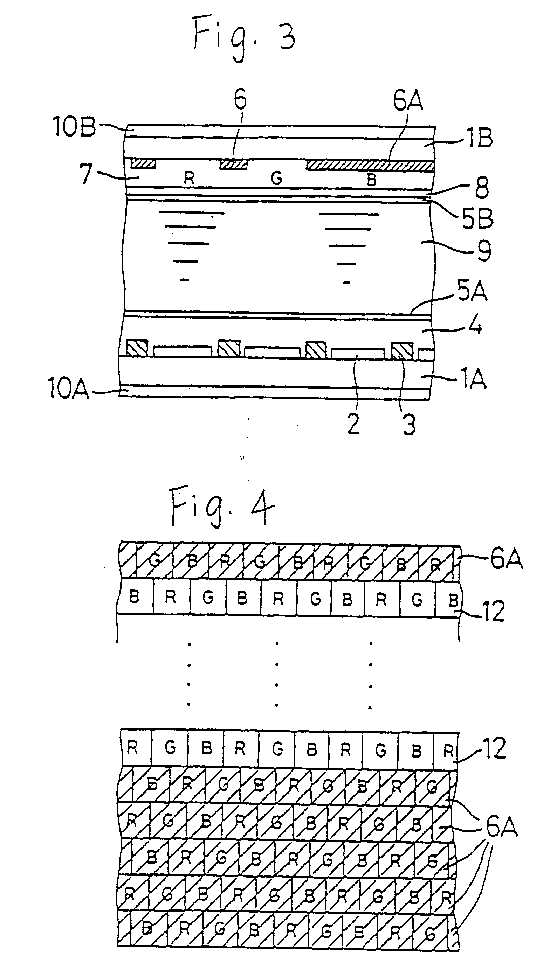

Figure 3 shows a liquid crystal display (LCD) panel of an active matrix type LCD apparatus, which is a typical example of a display apparatus. On one side of a first glass substrate **1A**, a number of gate bus lines and source bus lines (not shown) are formed in such a manner that they cross one another at right angles. Picture element electrodes **2** which are made of a transparent conductive material, and thin film transistors (TFTs) **3** are formed at each of the crossings of the gate and source bus lines to form a matrix arrangement. The gate and source of each TFT **3** are connected to the corresponding gate bus line and corresponding source bus line, respectively, and the drain is connected to the adjacent picture element electrode **2**. The top of the formative surface of the picture element electrodes **2** and TFTs **3** is coated with a transparent protective film **4** and an orientation film **5A**.

A second glass substrate **1B** is disposed opposite the first glass substrate **1A**. On the one side of this glass substrate **1B** which faces the glass substrate **1A**, a black matrix **6** is formed for shielding from light the areas other than the picture element electrodes **2** of the glass substrate **1A**. Red, green and blue colour filters **7** are formed correspondingly to the picture element electrodes **2** on the black matrix **6**. A common electrode **8** which is made of a transparent conductive material is formed over the entire surface of the color filters **7**, and is covered by an orientation film **5B**.

Between the orientation film **5A** and the orientation film **5B**, a liquid crystal layer **9** is disposed. Polarization plates **10A** and **10B** are arranged respectively on the one side of the first glass substrate **1A** opposite to the formative surface of the picture element electrodes **2**, etc., and on the one side of the second glass substrate **1B** opposite to the formative surface of the colour filter **7**, etc.

In the LCD apparatus comprising the above-described LCD panel, a scanning voltage (the voltage signal which designates in sequence each horizontal row of the picture element electrodes **2**) is sequentially applied to the gate bus lines to turn on the TFTs **3** connected to the applied gate bus line. Drive voltages corresponding respectively to the display data for the scanned horizontal row of the picture elements are supplied from the source bus lines to be applied to the horizontal row of the picture element electrodes **2** through the turned-on TFTs **3**.

When the drive voltage is applied to one of the picture element electrodes **2** through the corresponding TFT **3**, the drive voltage is selectively applied to the part of the liquid crystal layer **9** (this part constitutes one picture element) which is sandwiched between the driven picture element electrode **2** and the common electrode **8**, causing the optical characteristics of the part to change. When this change in the optical characteristics occurs, light is transmitted through only the driven picture element (the normally black system), or light is transmitted through only the picture elements which are not driven (the normally white system), depending upon the combination of the angles of the polarization axes of the polarization plates **10A** and **10B**. In the normally black system, light is transmitted through driven picture elements so that colour display is performed for the colour tones of colour filters **7** each corresponding to those picture elements, while light is not transmitted through the picture elements when they are not driven and those picture elements display black. In the case of the normally white system, it is the opposite of this.

In a display apparatus using a cathode-ray tube, the level of the beam current varies depending upon input signal levels, thereby causing the overall size of the displaying area in the vertical direction to be changed. In an extreme case, the vertical retrace line appears on the screen. In such a display apparatus, therefore, the size of the display area is set to be slightly greater than the screen.

In an LCD apparatus comprising the above-described structure, on the other hand, the display is not affected by input signal levels (in other words, the size of the display area is fixed depending upon the logic of the display operation). Usually, therefore, the display area of an LCD apparatus is greater than that of a display apparatus using a cathode-ray tube.

Generally, a VTR has a plurality of reproducing heads which are switched over with the period of one vertical interval. The changeover of the reproducing heads requires some period of time. When video signals are reproduced in such a VTR, therefore, switching noises appear in the portion of reproduced video signals which corresponds to the vertical interval. When displaying images obtained from video signals from a VTR on an LCD apparatus, switching noises appear in the top and bottom portions of the displaying area, which is greater than that of a cathode-ray tube, causing a disturbance of the picture image.

Accordingly, in a prior LCD apparatus, masks are formed to cover the picture elements where switching noises appear. More specifically, as shown in Figure 3, a black stripe **6A** is formed at the region which corresponds to the picture elements where the switching noise appears, whereby light is prevented from transmitting through this region. Figure 4 illustrates an LCD panel in which this kind of masking is provided. In this apparatus, picture elements 12 of the uppermost one row and lowermost five rows are masked by the black stripes **6A**.

When such an LCD apparatus receives video signals from a video signal outputting apparatus of another type such as a television receiver, the black stripes **6A** remain masking the uppermost and lowermost portions of the picture elements 12 so that a portion of the display area does not contribute to the display. This results in that it becomes impossible to make the most of the advantages of the LCD apparatus in achieving a larger display area as compared with a cathode-ray tube.

JP-A-1 151 888 discloses a video tape recorder for reproducing pictures having a special aspect ratio. The recorder outputs a signal having an expanded vertical blanking period, so that noise caused by the changeover of the video heads is not evident on a screen.

JP-A-58 7986 discloses a switching circuit for a VTR. The circuit switches the output signal of the VTR to be either a TV signal or a video signal to the monitor. The switching circuit operates automatically in response to a synchronising signal provided by the VTR.

The display apparatus of this invention comprises signal receiving means for receiving video signals from at least an image reproducing apparatus, flat-panel display means for displaying images based on said received video signals, and signal processing means, operable selectively only when the video signals are received for display from said image reproducing apparatus, to replace a predetermined portion of the video signals with an electrical mask signal which masks display on said display means of a corresponding image portion.

Thus, the invention described herein makes possible the objectives of:
(1) providing a display apparatus which can electrically mask the portion of the display area where switching noises appear;
(2) providing a display apparatus which can electrically mask the portion of the display area where switching noises appear, only when a video signal from a VTR is being played back and displayed; and
(3) providing a display apparatus which has a large display area.

According to the invention, when video signals from an image reproducing apparatus such as a VTR are received, a predetermined portion of the received video signals wherein switching noises may exist is replaced with an electrical mask signal such as a black level signal. Therefore, the part of the display area of the display apparatus which corresponds to said portion is masked so as not to contribute to the display, thereby eliminating the visible effect of the switching noises. On the other hand, when receiving video signals having no switching signal, the masking is not performed, resulting in that the overall size of the display area can be used for display.

Figure 1 is a block diagram showing an LCD apparatus according to an embodiment of the invention.

Figure 2 illustrates waveforms of signals appearing in the LCD display apparatus used in the apparatus of Figure 1.

Figure 3 is a sectional view of an LCD panel used in a conventional LCD apparatus.

Figure 4 is a plan view of the LCD panel of Figure 3.

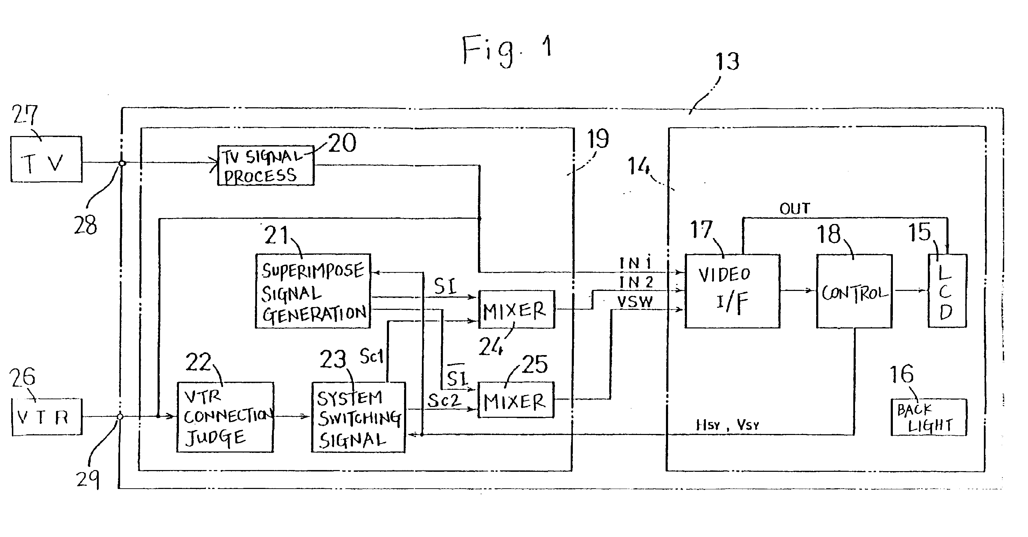

Figure 1 illustrates an LCD apparatus according to an embodiment of the invention. The display apparatus **13** of Figure 1 comprises an LCD module **14** which is of the active matrix type, and a signal processor **19**. The display apparatus **13** is provided with the superimposing function for mixedly displaying characters or the like.

The LCD module **14** comprises an LCD panel **15**, a back light device **16** which is a light source arranged behind the LCD panel **15**, a video interface circuit **17** which inverts and amplifies video signals **IN1** and **IN2** supplied from the signal processor **19** and supplies them to the LCD panel **15**, and a control circuit **18** which controls the drive for the LCD panel **15** based upon the output of the video interface circuit **17**. The LCD panel **15** has a similar structure as the LCD panel shown in Figure 3 except that the black stripe **6A** is not formed, and therefore its detailed description is omitted.

The signal processor **19** comprises a TV signal processing circuit **20**, a superimpose signal generation circuit **21**, a VTR connection judging circuit **22**, a system switching signal generation circuit **23**, and first and second mixers **24** and **25**.

The TV signal processing circuit **20** processes television video signals which are supplied from a television receiver **27** through a TV input terminal **28**. The superimpose signal generation circuit **21** generates a digital signal **SI** for characters, graphics, etc., which are to be superimposed on video signals supplied from the television receiver **27** or a VTR **26** to be mixedly displayed on the LCD panel **15**. The signal SI is supplied to the first mixer **24**. The superimpose signal generation circuit **21** also generates another signal **/SI** which is obtained by inverting the signal **SI**.

The VTR connection judging circuit **22** judges whether or not the VTR **26** is connected to a VTR input terminal **29**, and its output is coupled to the system switching signal generation circuit **23**. Both television video signals which are processed in the TV signal processing circuit **20**, and VTR video signals which are input through the VTR input terminal **29** are supplied to the video interface circuit **17** as the first video signal input **IN1**. The video signals output through the mixer **24** from the superimpose signal generation circuit **21** are supplied to the video interface circuit **17** as the second video signal input **IN2**.

The system switching signal generation circuit **23** receives the internal horizontal synchronizing signal **H**_{**SY**} and the internal vertical synchronizing signal **V**_{**SY**} from the control circuit **18**, and produces two kinds of outputs **SC1** and **SC2** for selectively switching and displaying on the LCD panel **15**, the first video signal input **IN1** and second video signal input **IN2** which are supplied to the video interface circuit **17**, in synchronization with the synchronizing signals **H**_{**SY**} and **V**_{**SY**}. The first mixer **24** receives the signal **SI** from the circuit **21** and the output **SC1** from circuit **23**, and the second mixer **25** receives the signal **/SI** from the circuit **21** and the output **SC2** from circuit **23** The output of the first mixer **24** is supplied to the video interface circuit **17** as the second input **IN2**, while the output of the second mixer **25** is supplied to the video interface circuit **17** as the system switching signal **VSW**.

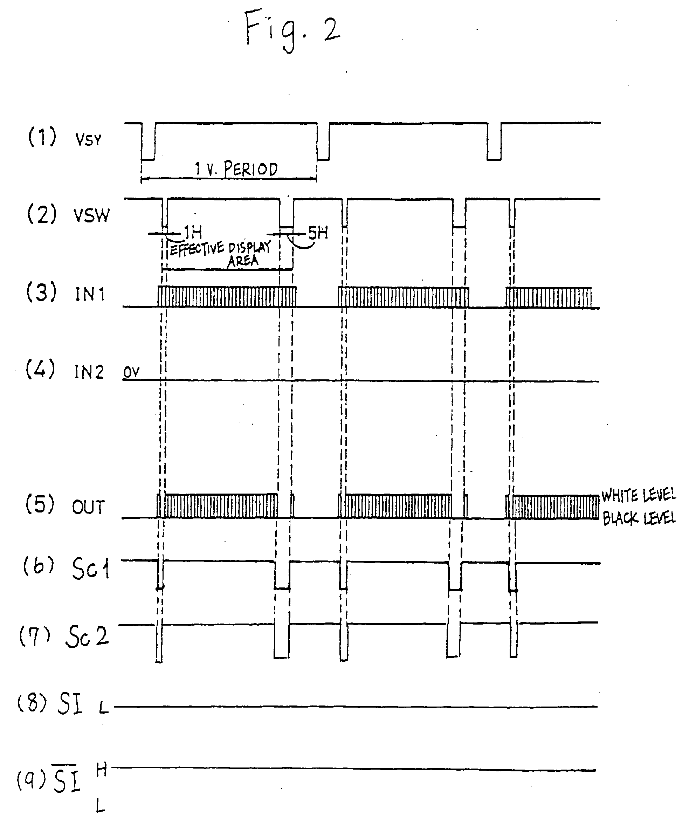

With reference to Figure 2, the operation of the LCD display apparatus **13** will be described. When the VTR **26** is connected to the VTR input terminal **29**, the VTR connection judging circuit **22** detects this connection. The video signal from the VTR **26** is sent to the video interface circuit **17** as the first video signal input **IN1**. When judging circuit **22** detects the connection of the VTR **26**, the system switching signal generation circuit **23** is controlled so that the first output **SC1** is as shown in (6) of Figure 2, and that no signal for superimposing characters or the like is output from the superimpose signal generation circuit **21** (namely, the digital output signal **SI** of the circuit **21** is always low as shown in (8) of Figure 2). Therefore, the second video signal input **IN2** is kept to be 0 volt, which is equivalent to black level, for one entire vertical period ((4) of Figure 2).

On the other hand, the second output **SC2** of the system switching signal generation circuit **23** is low during the scanning period of the picture elements of the first row and the scanning period of the picture elements of the lowest five rows of the liquid crystal panel **15**, and high during other periods ((7) of Figure 2). Hence, the system switching signal **VSW** output from the second mixer **25** to which the second output **SC2** and the inverted output signal **/SI** of the circuit **21** are supplied is low (0 volt) during the scanning period of the picture elements of the first row (corresponding to one horizontal scanning period) and the scanning period of the picture elements of the lowest five rows (corresponding to five horizontal scanning periods), and high (5 volts) during other periods as shown in (2) of Figure 2.

In the video interface circuit **17**, when the system switching signal **VSW** is high, the first video signal input **IN1** is selected to be output, and when the system switching signal **VSW** is low, the second input **IN2** is selected to be output. Therefore, during the scanning period of the picture elements of the first row and the scanning period of the picture elements of the lowest five rows, the output **OUT** of the video interface circuit **17** is the second video signal input **IN2** which is equivalent to the black level signal, while during other periods the output **OUT** is the first input **IN1** which is the video signal from the VTR **26**.

Accordingly, the image originating in the video signal from the VTR **26** is displayed on the LCD panel **15**, but the display area of the picture elements of the uppermost one row and the display area of the picture elements of the lowermost five rows are displayed in black. Since switching noises included in the video signal from the VTR **26** occurs at the timing corresponding to the masked area which is displayed in black, switching noises are concealed by the masking by the black display, and hence it is possible to eliminate the disturbance in the picture image caused by switching noises.

When characters or the like (e.g., a channel call) are to be superimposed, the levels of the outputs **SI** and **/SI** of the superimpose signal generation circuit **21** are controlled so as to be periodically low and high in accordance with the image data of the images to be superimposed, thereby enabling to mix and display the images on the LCD panel **15** together with the masking. According to this embodiment, however, the superimposed images are displayed as black level. If the superimposed images are to be display in another color, it is necessary to add an adequate circuit such as a muting circuit.

In the case where the VTR **26** is not connected to the VTR input terminal **29** and television video signals are input from the TV input terminal **28**, the VTR connection judging circuit **22** detects this no-connection state, and the second output **SC2** of the system switching signal generation circuit **23** is controlled so as to remain high, whereby the system switching signal **VSW** is kept high. Consequently, the masking by the black display is not performed, and the entire display area of the LCD panel **15** can be used effectively for picture image display.

In the above, an apparatus having two input systems to the video interface circuit **17** is described. In the case where there is only one system which inputs video signals, a signal corresponding to the mask of black level may be mixed in the video signals, using the internal horizontal synchronizing signal **H**_{**SY**} and the internal vertical synchronizing signal **V**_{**SY**} which are supplied from the control circuit **18**.

When a signal indicating that video signals are currently reproduced in the VTR **26** is sent from the VTR **26**, it is possible to omit the VTR connection judging circuit **22**. Such a signal can be obtained from an adequate relay circuit which is interlocked with the replay button of the VTR **26**.

The VTR connection judging circuit **22** may be a switch circuit which is provided adjacent to the VTR input terminal **29** and actuated by the connection of the VTR **26**. Alternatively, the VTR connection judging circuit **22** may be a changeover switch which is manually operated.

An active matrix type LCD display apparatus is described in the above, but this invention is not being limited to this, and it is apparent for those skilled in the art that this invention also applicable to an LCD display apparatus of another type, and still further to another kind of display apparatus such as an EL display apparatus.

According to the invention, since the display apparatus is constructed so that when video signals from a VTR are reproduced to be displayed, the switching noise portion included in the video signals is changed to black level before being displayed, the section within the picture image area in which the switching noise originally appeared is masked by black level, making it possible to conceal the disorder in the picture image. On the other hand, in the case where television video signals are to be displayed, the picture can be enjoyed on a wide picture image area because the mask of black level is not generated.

In another embodiment of the invention, the control circuit **18** controls the portion of the picture elements where switching noises appear, so as not be driven. This embodiment can achieve the same effect as the above-described embodiment.

It is understood that various other modifications will be apparent to and can be readily made by those skilled in the art within the scope of this invention, as defined by the claims.

## Claims

1. A display apparatus comprising signal receiving means (28,29) for receiving video signals (IN1) from at least an image reproducing apparatus (26), flat-panel display means (15,18) for displaying images based on said received video signals, and signal processing means (23,25,17), operable selectively only when the video signals (IN1) are received for display from said image reproducing apparatus, to replace a predetermined portion of the video signals (IN1) with an electrical mask signal (IN2) which masks display on said display means (15,18) of a corresponding image portion.

2. A display apparatus as claimed in claim 1, wherein the display means (15,18) includes control means (18) for controlling the images and for supplying an internal synchronising signal (H_{SY},V_{SY}) to the signal processing means (23,25,17).

3. A display apparatus as claimed in claim 1 or 2, wherein the electrical mask signal (IN2) is a black level signal.

4. A display apparatus as claimed in any preceding claim, wherein the predetermined portion of the video signals (IN1) is that wherein switching noises exist.

5. A display apparatus as claimed in any preceding claim, wherein the predetermined portion of the video signals (IN1) includes at least one first horizontal scanning line.

6. A display apparatus as claimed in any preceding claim, wherein the predetermined portion of the video signals (IN1) includes at least one last horizontal scanning line.

7. A display apparatus as claimed in any preceding claim, wherein the signal receiving means (28,29) further receives video signals from a television receiver.

8. A display apparatus as claimed in claim 7, further comprising judging means (22) for judging whether or not said display apparatus is receiving video signals from an image reproducing apparatus.

9. A display apparatus as claimed in any preceding claim, wherein said image reproducing apparatus is a video tape recorder.

10. A display apparatus as claimed in any preceding claim, wherein the signal processing means (23,25,17) comprises drive means for generating the electrical mask signal (IN2), the drive means comprising:
a superimpose signal generator (21) for generating a first pair of different signals (SI,/SI), each having a predetermined signal level;
system switching signal generating means (23) for generating a second pair of different signals (SC1,SC2) in accordance with said internal synchronising signal;
a first mixer (24) for mixing a first signal (SI) from the superimpose signal generator and a first signal (SC1) from the system switching signal generating means to generate the electrical mask signal (IN2);
a second mixer (25) for mixing a second signal (/SI) from the superimpose signal generator and a second signal (SC2) from the system switching signal generating means to generate a switching signal (VSW); and
an interface means (17) for supplying the display means with either the video signals (IN1) or the electrical mask signal (IN2) in dependence upon the switching signal (VSW).

## Patentansprüche

1. Anzeigevorrichtung mit einer Signalempfangseinrichtung (28, 29) zum Empfangen von Videosignalen (IN1) von mindestens einem Bildwiedergabegerät (26), einer Flachbildschirmeinrichtung (15, 18) zum Darstellen von Bildern auf Grundlage der empfangenen Videosignale und einer Signalverarbeitungseinrichtung (23, 25, 17), die selektiv nur dann betrieben wird, wenn die Videosignale (IN1) zur Anzeige von der Bildwiedergabevorrichtung erhalten werden, um einen vorgegebenen Teil der Videosignale (IN1) durch ein elektrisches Maskierungssignal (IN2) zu ersetzen, das die Anzeige auf der Anzeigeeinrichtung (15, 18) für einen entsprechenden Bildbereich maskiert.

2. Anzeigevorrichtung nach Anspruch 1, bei der die Anzeigeeinrichtung (15, 18) eine Steuereinrichtung (18) beinhaltet, um die Bilder zu steuern und um ein internes Synchronisiersignal (H_{SY}, V_{SY}) an die Signalverarbeitungseinrichtung (23, 25, 17) zu liefern.

3. Anzeigevorrichtung nach Anspruch 1 oder Anspruch 2, bei der das elektrische Maskierungssignal (IN2) ein Schwarzpegelsignal ist.

4. Anzeigevorrichtung nach einem der vorstehenden Ansprüche, bei der der vorgegebene Teil der Videosignale (IN1) derjenige ist, in dem Umschaltstörsignale vorhanden sind.

5. Anzeigevorrichtung nach einem der vorstehenden Ansprüche, bei der der vorgegebene Teil der Videosignale (IN1) mindestens die erste horizontale Abrasterzeile beinhaltet.

6. Anzeigevorrichtung nach einem der vorstehenden Ansprüche, bei der der vorgegebene Teil der Videosignale (IN1) mindestens die letzte horizontale Abrasterzeile beinhaltet.

7. Anzeigevorrichtung nach einem der vorstehenden Ansprüche, bei der die Signalempfangseinrichtung (28, 29) ferner Videosignale von einem Fernsehempfänger empfängt.

8. Anzeigevorrichtung nach Anspruch 7, ferner mit einer Beurteilungseinrichtung (22) zum Beurteilen, ob die Anzeigevorrichtung Videosignale von einer Bildwiedergabevorrichtung empfängt oder nicht.

9. Anzeigevorrichtung nach einem der vorstehenden Ansprüche, bei der die Bildwiedergabevorrichtung ein Videobandrecorder ist.

10. Anzeigevorrichtung nach einem der vorstehenden Ansprüche, bei der die Signalverarbeitungseinrichtung (23, 25, 17) eine Treibereinrichtung zum Erzeugen des elektrischen Maskierungssignals (IN2) aufweist, welche Treibereinrichtung folgendes umfaßt:
- einen Überlagerungssignalgenerator (21) zum Erzeugen eines ersten Paars verschiedener Signale (SI, /SI), die jeweils einen vorgegebenen Signalpegel aufweisen;
- eine Systemumschaltsignal-Erzeugungseinrichtung (23) zum Erzeugen eines zweiten Paars verschiedener Signale (SC1, SC2) abhängig vom internen Synchronisiersignal;
- einen ersten Mischer (24) zum Mischen eines ersten Signals (SI) vom Überlagerungssignalgenerator sowie eines ersten Signals (SC1) von der Systemumschaltsignal-Erzeugungseinrichtung, um das elektrische Maskierungssignal (IN2) zu erzeugen;
- einen zweiten Mischer (25) zum Mischen des zweiten Signals (/SI) vom Überlagerungssignalgenerator sowie des zweiten Signals (SC2) von der Systemumschaltsignal-Erzeugungseinrichtung, um ein Umschaltsignal (VSW) zu erzeugen; und
- eine Schnittstelleneinrichtung (17) zum Versorgen der An-zeigeeinrichtung entweder mit den Videosignalen (IN1) oder dem elektrischen Maskierungssignal (IN2) abhängig vom Umschaltsignal (VSW).

## Revendications

1. Dispositif d'affichage comprenant des moyens de réception de signaux (28, 29) pour recevoir des signaux vidéo (IN1) provenant d'au moins un dispositif de reproduction d'images (26), des moyens d'affichage à panneau (15, 18) pour afficher des images basées sur lesdits signaux vidéo reçus, et des moyens de traitement de signaux (23, 25, 17), actionnables de façon sélective uniquement lorsque les signaux vidéo (IN1) sont reçus pour un affichage par ledit dispositif de reproduction d'images, afin de remplacer une portion prédéterminée des signaux vidéo (IN1) par un signal électrique de masque (IN2) qui masque un affichage sur lesdits moyens d'affichage (15, 18) d'une portion d'image correspondante.

2. Dispositif d'affichage selon la revendication 1, dans lequel les moyens d'affichage (15, 18) incluent des moyens de commande (18) pour commander les images et pour fournir un signal de synchronisation interne (H_{SY}, V_{SY}) aux moyens de traitement de signaux (23, 25, 17).

3. Dispositif d'affichage selon la revendication 1 ou 2, dans lequel le signal électrique de masque (IN2) est un signal de niveau noir.

4. Dispositif d'affichage selon l'une quelconque des revendications précédentes, dans lequel la portion prédéterminée des signaux vidéo (IN1) est constituée par celle dans laquelle existent des bruits de commutation.

5. Dispositif d'affichage selon l'une quelconque des revendications précédentes, dans lequel la portion prédéterminée des signaux vidéo (IN1) inclut au moins une première ligne de balayage horizontal.

6. Dispositif d'affichage selon l'une quelconque des revendications précédentes, dans lequel la portion prédéterminée des signaux vidéo (IN1) inclut au moins une dernière ligne de balayage horizontal.

7. Dispositif d'affichage selon l'une quelconque des revendications précédentes, dans lequel les moyens de réception de signaux (28, 29) reçoivent également des signaux vidéo provenant d'un récepteur de télévision.

8. Dispositif d'affichage selon la revendication 7, comprenant également des moyens de décision (22) pour décider si oui ou non ledit dispositif d'affichage reçoit des signaux vidéo provenant d'un dispositif de reproduction d'images.

9. Dispositif d'affichage selon l'une quelconque des revendications précédentes, dans lequel ledit dispositif de reproduction d'images est un magnétoscope.

10. Dispositif d'affichage selon l'une quelconque des revendications précédentes, dans lequel les moyens de traitement de signaux (23, 25, 17) comprennent des moyens de commande pour générer le signal électrique de masque (IN2), les moyens de commande comprenant:
un générateur de signal d'incrustation (21) pour générer une première paire de signaux différents (SI, /SI) ayant chacun un niveau prédéterminé de signal;
des moyens de génération de signal de commutation de système (23) pour générer une seconde paire de signaux différents (SC1, SC2) en accord avec ledit signal de synchronisation interne;
un premier mélangeur (24) pour mélanger un premier signal (SI) provenant du générateur de signal de superposition et un premier signal (SC1) provenant des moyens de génération de signal de commutation de système afin de générer le signal électrique de masque (IN2);
un second mélangeur (25) pour mélanger un second signal (/SI) provenant du générateur de signal d'incrustation et un second signal (SC2) provenant des moyens de génération de signal de commutation de système afin de générer un signal de commutation (VSW); et
des moyens d'interface (17) pour fournir aux moyens d'affichage soit les signaux vidéo (IN1) soit le signal électrique de masque (IN2) en fonction du signal de commutation (VSW).
